# EUROPÄISCHE PATENTSCHRIFT

(11) **EP 2 930 782 B1**
(45) Veröffentlichungstag und Bekanntmachung des Hinweises auf die Patenterteilung: **13.12.2017**
(21) Anmeldenummer: 14164103.5
(22) Anmeldetag: 09.04.2014
(51) Int. Cl.: H01M 10/6556, H01M 10/6572

(54) **Kühlelement und Batteriesystem**
Cooling element and battery system
Élément de refroidissement et système de batterie

(43) Veröffentlichungstag der Anmeldung: 14.10.2015
(73) Patentinhaber: Samsung SDI Co., Ltd., Yongin-si, Gyeonggi-do (KR)
(72) Erfinder: BRANDSTAETTER, Stefan, 8111 Judendorf-Strassengel (AT); HOERMANN, Thomas, 8055 Graz (AT); ROEPKE, Stefan, 8041 Graz (AT)
(74) Vertreter: Gulde & Partner

(56) Entgegenhaltungen:
- WO-A1-2012/124446
- WO-A1-2013/113618
- JP-A- 2009 152 440
- JP-A- 2012 195 210

## Beschreibung

### Gebiet der Erfindung

Die vorliegende Erfindung betrifft ein Kühlelement, zur Kühlung eines Bauteils eines Batteriesystems und ein entsprechendes Batteriesystem mit einem solchen Kühlelement.

### Stand der Technik

Kühlelemente, zur Kühlung eines Bauteils eines Batteriesystems, sind hinlänglich bekannt und dienen dazu eine im Betrieb des Batteriesystems entstehende unerwünschte Wärme abzuführen. Hierzu kann ein Kühlelement von einem Kühlmedium, wie beispielsweise Wasser, durchströmbare Kühlkanäle ausbilden, so dass beispielsweise von am Kühlelement anliegenden Batteriezellen Wärme auf das Kühlelement und weiter auf das Kühlmedium übertragen wird und sodann durch die Strömung des Kühlmediums aus der Umgebung der Batteriezellen abgeführt wird. Das Kühlmedium kann seinerseits beispielsweise durch einen Klimakreislauf in einem Fahrzeug gekühlt werden, wobei jedoch ein entsprechendes Klimagerät vorhanden sein muss und die Anbindung an einen Klimakreislauf aufwändig ist.

Bekannt ist andererseits dass Peltierelemente eingesetzt werden können, um ein Batteriesystem zu kühlen. So offenbart die DE 10 2009 005 853 A1 ein Batteriesystem, umfassend wenigstens eine Batterie, dass ferner wenigstens ein Peltierelement umfasst, welches der Kühlung und/oder Erwärmung wenigstens einer Batterie dient. Die DE 10 2012 103 131 A1 offenbart ein Kraftfahrzeug mit einer Fahrzeugbatterie, wobei die Fahrzeugbatterie durch zumindest ein der Fahrzeugbatterie zugeordnetes Peltierelement kühlbar ist. Die Kühlung allein durch Peltierelemente ist jedoch wenig effizient.
Aus der WO 2013/113618 A1 ist ein aus zwei Teilen bestehendes Kühlelement bekannt, bei welchem an einer Seite ein Peltierelement angeordnet ist und bei welchem der Kühlkanal durch zwei ebene Flächen des Batteriegehäuses gebildet wird.
Die JP 2009 152440 A beschreibt ein seitlich an einem Batterieblock angebrachtes Kühlelement, welches aus zwei Teilen besteht und an dem an einer Seite ein thermoelektrisches Bauteil angeordnet ist, welches innerhalb des Kühlmittelkanals liegt.
Mit der JP 2012 195210 A wurde ein Kühlelement bekannt, welches einen Kühlkanal mit an dessen Unterseite angeordnetem Peltierelement aufweist.
Die WO 2012/124446 A1 offenbart ein Batteriemodul mit einem vertikalen Kühlkanal, in dem jeweils an den Seiten Peltierelemente angeordnet sind.

Eine einfache Kombination eines Kühlelements mit Kühlkanälen einerseits mit einer zusätzlichen Kühlung durch Peltierelemente andererseits würde einen unerwünscht großen Bauraum beispielsweise in einem Kraftfahrzeug erfordern.

### Zusammenfassung der Erfindung

Es ist eine Aufgabe der Erfindung, ein Kühlelement zur Kühlung eines Bauteils eines Batteriesystems und ein entsprechendes Batteriesystem anzugeben, dass eine effiziente Kühlung bei geringem Bauraum ermöglicht.

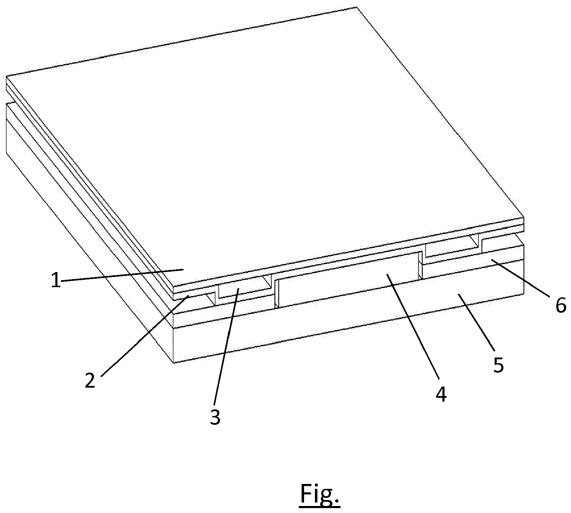

Die Lösung der Aufgabe erfolgt durch ein Kühlelement, zur Kühlung eines Bauteils eines Batteriesystems, umfassend einen Kühleroberteil und einen Kühlerunterteil, wobei zwischen Kühleroberteil und Kühlerunterteil zumindest ein von einem Kühlmedium durchströmbarer Kühlkanal ausgebildet ist, wobei auf dem Kühlerunterteil anliegend ein Peltierelement so angeordnet ist, dass es seitlich neben und zumindest teilweise auf Höhe des Kühlkanals liegt und wobeidas Peltierelement an zumindest zwei Seiten an einem oder zwei Kühlkanälen seitlich anliegt.
Der Ausdruck "Höhe" bezieht sich dabei auf die "vertikale" Erstreckung des üblicherweise flächigen Kühlelements, also die Richtung der Verbindung zwischen Kühleroberteil und Kühlerunterteil, die im Wesentlichen normal auf das Kühleroberteil und Kühlerunterteil steht. "Oben" und "unten" des "Kühleroberteils" und "Kühlerunterteils" wiederum beziehen sich auf die in der Figur dargestellte Ausrichtung des Kühlelements. Das Kühlelement kann selbstverständlich auch in einer anderen Ausrichtung verwendet werden.
Dass das zur Kühlung eingesetzte Peltierelement so angeordnet ist, dass es zumindest teilweise auf Höhe des Kühlkanals liegt, bedeutet, dass sich der Kühlkanal und das Peltierelement in der genannten Höhen-Richtung zumindest teilweise überschneiden. Das Peltierelement verwendet daher einen Bauraum der seitlich neben dem Kühlkanal liegt, so dass die Höhe des Kühlelements trotz Verwendung des Peltierelements nicht um die gesamte Höhe des Peltierelements zunimmt und somit bei Nutzung sowohl eines Kühlkanals als auch eines Peltierelements Bauraum gewonnen wird. Das Peltierelement kann auch gänzlich innerhalb der Höhe des Kühlkanals liegen, so dass die Höhe des gesamten Kühlelements durch das Peltierelement nicht zunimmt.

Die Lösung der Aufgabe erfolgt auch durch ein Batteriesystem, dass bevorzugt mehrere Batteriezellen umfasst, wobei das Batteriesystem zumindest ein solches Kühlelement umfasst.

Weiterbildungen der Erfindung sind in den abhängigen Ansprüchen, der Beschreibung sowie den beigefügten Zeichnungen angegeben.

Vorzugsweise wird der Kühlkanal durch das Kühlerunterteil ausgeformt, so dass kein weiteres Bauteil zur Bildung des Kanals erforderlich ist und ein guter Temperaturübertrag ermöglicht ist.

Vorzugsweise ist das Kühleroberteil eben und bietet dadurch eine gute Anlagefläche für den oder die zu kühlenden Bauteile, insbesondere Batteriezellen.

Das ganze Kühlelement ist bevorzugt flach ausgebildet.

Bevorzugt bildet der Kühlkanal im Kühlerunterteil eine Stufe aus und das Peltierelement liegt seitlich an der Stufe an, so dass der vorhandene Bauraum gut genutzt wird und ein guter Temperaturübertrag zwischen Peltierelement und Kühlkanal ermöglicht wird.

Erfindungsgemäß liegt das Peltierelement an zumindest zwei Seiten an einem oder zwei Kühlkanälen seitlich an. Die seitlichen Kühlkanäle können durch einen gemeinsamen Kanal gebildet sein der in verschiedenen Richtungen verläuft oder durch unterschiedliche Kanäle gebildet sein. Insbesondere kann es sich um einen Zulauf und um einen Ablauf des Kühlmediums handeln. Insbesondere können die Kanäle an zwei gegenüberliegenden Seiten des Peltierelements an diesem anliegen.

Bevorzugt liegt das Peltierelement an der dem Kühlerunterteil abgewandten Seite auf einem Trägerelement auf, insbesondere auf einem für die Montage des Kühlelements genutzten Anbindungsträger.

Vorzugsweise ist zwischen dem Trägerelement und dem Kühlerunterteil ein Wärmedämmelement angeordnet. Hierdurch kann die Bildung eines Kondensats am Kühlerunterteil minimiert werden.

Bevorzugt ist das Wärmedämmelement ausschließlich in Bereichen angeordnet, in welchen kein Peltierelement angeordnet ist. "Bereiche" meint in diesem Zusammenhang Zonen entlang der üblicherweise flächigen Erstreckung des Kühlerunterteils, also entlang dessen Oberfläche. Das Wärmedämmelement kann daher das Kühlerunterteil kontaktieren, da das Kühlerunterteil in diesen Bereichen nicht von einem Peltierelement kontaktiert wird.

Insbesondere kann das Wärmedämmelement das Kühlerunterteil in einem Bereich kontaktieren, in dem das Kühlerunterteil einen Kühlkanal ausbildet.

Gemäß einer Ausführungsform ist das Kühlerunterteil und/oder das Trägerelement elektrisch leitfähig ausgebildet. Dazu kann das betreffende Bauteil aus einem elektrisch leitfähigen Material wie Metall bestehen oder aus einem isolierenden Material wie Kunststoff, wobei elektrisch leitfähige Elemente, wie Schienen oder Platten, in das Bauteil eingearbeitet sind.

### Kurzbeschreibung der Zeichnung

Die Erfindung wird im Folgenden beispielhaft unter Bezugnahme auf die Zeichnung beschrieben.
- Fig.: ist eine dreidimensionale schematische Ansicht eines erfindungsgemäßen Kühlelements.

### Detaillierte Beschreibung der Erfindung

In der Fig. ist ein erfindungsgemäßes Kühlelement dargestellt, mit einem Kühleroberteil 1 und einen Kühlerunterteil 2, die zusammen eine Kühlplatte bilden, wobei zwischen Kühleroberteil 1 und Kühlerunterteil 2 zwei von einem Kühlmedium durchströmbare Kühlkanäle 3, die durch die Form des Kühlerunterteils 2 geformt werden, ausgebildet sind. An der Oberseite des ebenen Kühleroberteils 1 kann ein zu kühlendes Bauteil, wie etwa eine oder mehrere Batteriezellen (nicht dargestellt), in Kontakt mit dem Kühleroberteil 1 angeordnet sein.

Auf dem Kühlerunterteil 2 anliegend ist ein Peltierelement 4 so angeordnet, dass es teilweise auf Höhe des Kühlkanals 3 liegt. Das Peltierelement 4 liegt an zwei Seiten, in der Fig. links und rechts dargestellt, an Seitenwänden der zwei Kühlkanäle 3 an.

Das Peltierelement 4 und Wärmedämmelemente 6 liegen an der dem Kühlerunterteil 2 abgewandten Seite auf einem Trägerelement 5 auf.

Die Wärmedämmelemente 6 sind dabei links und rechts des Peltierelements 4 angeordnet und sind seitlich in Kontakt mit dem Peltierelement 4 und an deren Oberseite in Kontakt mit den Kühlkanälen 3, die vom Kühlerunterteil 2 ausgebildet werden.

### Bezugszeichenliste

- 1: Kühleroberteil
- 2: Kühlerunterteil
- 3: Kühlkanal
- 4: Peltierelement
- 5: Trägerelement
- 6: Wärmedämmelement

## Patentansprüche

1. Kühlelement, zur Kühlung eines Bauteils eines Batteriesystems, umfassend einen Kühleroberteil (1) und einen Kühlerunterteil (2), wobei zwischen Kühleroberteil (1) und Kühlerunterteil (2) zumindest ein von einem Kühlmedium durchströmbarer Kühlkanal (3) ausgebildet ist, wobei, auf dem Kühlerunterteil (2) anliegend ein Peltierelement (4) so angeordnet ist, dass es seitlich neben und teilweise auf Höhe des Kühlkanals (3) liegt,
**dadurch gekennzeichnet, dass**
das Peltierelement (4) an zumindest zwei Seiten an einem oder zwei Kühlkanälen (3) seitlich anliegt.

2. Kühlelement nach Anspruch 1,
**dadurch gekennzeichnet, dass** der Kühlkanal (3) durch das Kühlerunterteil (2) ausgeformt wird.

3. Kühlelement nach zumindest einem der vorhergehenden Ansprüche,
**dadurch gekennzeichnet, dass** das Kühleroberteil (1) eben ist.

4. Kühlelement nach zumindest einem der vorhergehenden Ansprüche,
**dadurch gekennzeichnet, dass** der Kühlkanal (3) im Kühlerunterteil (2) eine Stufe ausbildet und das Peltierelement (4) an der Stufe seitlich anliegt.

5. Kühlelement nach zumindest einem der vorhergehenden Ansprüche,
**dadurch gekennzeichnet dass** das Peltierelement (4) an der dem Kühlerunterteil (2) abgewandten Seite auf einem Trägerelement (5) aufliegt.

6. Kühlelement nach Anspruch 5,
**dadurch gekennzeichnet, dass** zwischen dem Trägerelement (5) und dem Kühlerunterteil (2) ein Wärmedämmelement (6) angeordnet ist.

7. Kühlelement nach Anspruch 6,
**dadurch gekennzeichnet, dass** das Wärmedämmelement (6) ausschließlich in Bereichen angeordnet ist, in welchen kein Peltierelement (4) angeordnet ist.

8. Kühlelement nach zumindest einem der Ansprüche 6 oder 7,
**dadurch gekennzeichnet, dass** das Wärmedämmelement (6) in einem Bereich das Kühlerunterteil (2) kontaktiert, in dem das Kühlerunterteil (2) einen Kühlkanal (3) ausbildet.

9. Kühlelement nach zumindest einem der vorhergehenden Ansprüche,
**dadurch gekennzeichnet, dass** das Kühlerunterteil (2) und/oder das Trägerelement (5) elektrisch leitfähig ausgebildet sind.

10. Batteriesystem umfassend zumindest ein Kühlelement nach zumindest einem der vorhergehenden Ansprüche.

## Claims

1. Cooling element for cooling a component of a battery system, comprising a cooler upper part (1) and a cooler lower part (2), wherein at least one cooling channel (3) through which a cooling medium can flow is formed between the cooler upper part (1) and the cooler lower part (2), wherein a Peltier element (4) is arranged in a manner bearing against the cooler lower part (2) and in such a way that it is situated laterally next to and partially at the level of the cooling channel (3), **characterized in that** the Peltier element (4), on at least two sides, bears laterally against one or two cooling channels (3).

2. Cooling element according to claim 1, **characterized in that** the cooling channel (3) is formed by the cooler lower part (2).

3. Cooling element according to at least one of the preceding claims, **characterized in that** the cooler upper part (1) is planar.

4. Cooling element according to at least one of the preceding claims, **characterized in that** the cooling channel (3) forms a step in the cooler lower part (2), and the Peltier element (4) bears laterally against the step.

5. Cooling element according to at least one of the preceding claims, **characterized in that** the Peltier element (4), on the side facing away from the cooler lower part (2), rests on a carrier element (5).

6. Cooling element according to claim 5, **characterized in that** a thermal insulation element (6) is arranged between the carrier element (5) and the cooler lower part (2).

7. Cooling element according to claim 6, **characterized in that** the thermal insulation element (6) is arranged exclusively in regions in which no Peltier element (4) is arranged.

8. Cooling element according to at least one of claims 6 or 7, **characterized in that** the thermal insulation element (6) makes contact with the cooler lower part (2) in a region in which the cooler lower part (2) forms a cooling channel (3).

9. Cooling element according to at least one of the preceding claims, **characterized in that** the cooler lower part (2) and/or the carrier element (5) are electrically conductive.

10. Battery system comprising at least one cooling element according to at least one of the preceding claims.

## Revendications

1. Elément de refroidissement, destiné à refroidir un élément d'un système de batterie, comportant une partie supérieure de refroidissement (1) et une partie inférieure de refroidissement (2), dans lequel au moins un canal de refroidissement (3) pouvant être traversé par un milieu de refroidissement est formé entre la partie supérieure de refroidissement (1) et la partie inférieure de refroidissement (2), dans lequel un élément Peltier (4) est en appui sur la partie inférieure de refroidissement (2) de telle manière qu'il se situe latéralement à côté et en partie au niveau du canal de refroidissement (3),
**caractérisé en ce que** :
l'élément Peltier (4) s'applique latéralement contre un ou deux canaux de refroidissement (3) sur au moins deux faces.

2. Elément de refroidissement selon la revendication 1, **caractérisé en ce que** le canal de refroidissement (3) est formé par la partie inférieure de refroidissement (2).

3. Elément de refroidissement selon au moins l'une des revendications précédentes, **caractérisé en ce que** la partie supérieure de refroidissement (1) est plate.

4. Elément de refroidissement selon au moins l'une des revendications précédentes, **caractérisé en ce que** le canal de refroidissement (3) forme un étage dans la partie inférieure de refroidissement (2) et l'élément Peltier (4) s'applique latéralement contre l'étage.

5. Elément de refroidissement selon au moins l'une des revendications précédentes, **caractérisé en ce que** l'élément Peltier (4) repose sur un élément de support (5) contre la face opposée à la partie inférieure de refroidissement (2).

6. Elément de refroidissement selon la revendication 5, **caractérisé en ce qu'**un élément d'isolation thermique (6) est agencé entre l'élément de support (5) et la partie inférieure de refroidissement (2).

7. Elément de refroidissement selon la revendication 6, **caractérisé en ce que** l'élément d'isolation thermique (6) est agencé exclusivement dans des zones dans lesquelles aucun élément Peltier (4) n'est agencé.

8. Elément de refroidissement selon au moins l'une des revendications 6 ou 7, **caractérisé en ce que** l'élément d'isolation thermique (6) est en contact avec la partie inférieure de refroidissement (2) dans une zone dans laquelle la partie inférieure de refroidissement (2) forme un canal de refroidissement (3).

9. Elément de refroidissement selon au moins l'une des revendications précédentes, **caractérisé en ce que** la partie inférieure de refroidissement (2) et/ou l'élément de support (5) sont électroconducteurs.

10. Système de batterie comprenant au moins un élément de refroidissement selon au moins l'une des revendications précédentes.
